# FASCICULE DE BREVET EUROPEEN

(11) **EP 3 132 312 B1**
(45) Date de publication et mention de la délivrance du brevet: **21.03.2018**
(21) Numéro de dépôt: 15718557.0
(22) Date de dépôt: 09.04.2015
(51) Int. Cl.: G03B 21/62, B60R 1/00, G02B 5/02, B60R 1/12

(54) **SYSTEME D'AFFICHAGE D'UNE IMAGE SUR UN PARE-BRISE**
SYSTEM ZUR ANZEIGE EINES BILDES AUF EINER WINDSCHUTZSCHEIBE
SYSTEM FOR DISPLAYING AN IMAGE ON A WINDSHIELD

(30) Priorité: 16.04.2014 FR 1453404
(43) Date de publication de la demande: 22.02.2017
(60) Demande divisionnaire: 17151187.6
(73) Titulaire: Commissariat à l'Energie Atomique et aux Energies Alternatives, 75015 Paris (FR)
(72) Inventeur: MARTINEZ, Christophe, F-38100 Grenoble (FR); ROSSINI, Umberto, F-38500 Coublevie (FR)
(74) Mandataire: Thibon, Laurent
(86) Numéro de dépôt international: PCT/FR2015/050956
(87) Numéro de publication internationale: WO 2015/158999

(56) Documents cités:
- WO-A1-2013/069589
- JP-A- 2005 055 822
- US-A1- 2002 126 378
- US-A1- 2002 163 722
- US-A1- 2010 195 201
- US-A1- 2013 083 291
- US-A1- 2013 342 813

## Description

La présente demande de brevet revendique la priorité de la demande de brevet français FR14/53404 qui sera considérée comme faisant partie intégrante de la présente description.

### Domaine

La présente demande concerne un système d'affichage d'une image sur un pare-brise transparent de véhicule (par exemple de véhicule automobile), et un écran adapté à un tel système, cet écran pouvant en outre avoir des applications dans d'autres domaines. Les documents WO2013/069589, US2002/163722, US2002/126378 et US2013/083291 décrivent des exemples d'écrans de projection et de procédés de réalisation de tels écrans.

### Exposé de l'art antérieur

On a déjà proposé des systèmes dans lesquels une image est projetée sur un film diffuseur transparent collé sur le pare-brise à l'intérieur du véhicule, permettant de fournir à un occupant du véhicule des informations s'affichant en superposition de la scène extérieure visible à travers le pare-brise.

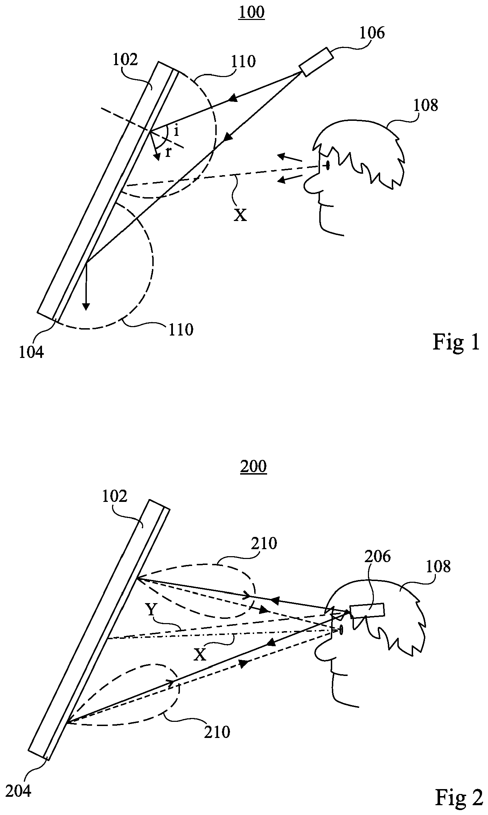

La figure 1 est une vue en coupe représentant de façon schématique un exemple d'un système 100 d'affichage d'une image sur un pare-brise transparent 102. Le système 100 comprend un film diffuseur transparent 104 revêtant la face intérieure du pare-brise, c'est-à-dire sa face tournée vers l'intérieur du véhicule. Le système 100 comprend en outre un projecteur 106 situé à l'intérieur du véhicule et agencé pour permettre de projeter une image sur tout ou partie de la surface du film 104 tournée vers l'intérieur du véhicule (c'est-à-dire opposée au pare-brise 102).

Le film 104 est un film diffuseur réflectif adapté à réfléchir, en la diffusant plus ou moins fortement, la lumière provenant du projecteur 106, et n'altérant pas ou peu la lumière provenant de l'extérieur du véhicule.

À moins que le film ou écran diffuseur 104 ne soit parfaitement lambertien, c'est-à-dire adapté à renvoyer la lumière avec une luminance constante dans toutes les directions, le cône de diffusion de la lumière réfléchie sur la surface du film 104, ou diagramme de répartition angulaire énergétique du rayonnement diffusé, est centré sur une direction distincte de la direction du rayonnement incident, formant un angle r avec la normale au point d'incidence égal à l'angle de réflexion spéculaire, c'est-à-dire à l'angle i entre la normale au point d'incidence et le rayon incident.

Compte tenu de l'espace généralement limité des habitacles de véhicules, et de la disposition du pare-brise par rapport à l'utilisateur 108, cet angle de réflexion spéculaire est généralement éloigné de l'axe principal X du regard de l'utilisateur. Ainsi, dans la plupart des cas, il est nécessaire que l'écran 104 présente un cône de diffusion 110 (représenté en trait interrompu sur la figure 1) large, proche du cas lambertien. Il en résulte que l'énergie lumineuse projetée sur l'écran 104 par le projecteur 106 est dispersée dans tout l'espace angulaire, seule une petite fraction de cette énergie étant captée par les pupilles de l'observateur.

Ainsi, un inconvénient des systèmes d'affichage du type décrit en relation avec la figure 1 est qu'ils présentent un rendement lumineux relativement faible, ce qui peut poser problème dans certaines situations, et notamment en cas de forte luminosité extérieure.

Il serait souhaitable de pouvoir disposer d'un système d'affichage d'une image sur un pare-brise, palliant tout ou partie des inconvénients des systèmes connus.

Il serait en outre souhaitable de pouvoir disposer d'un écran adapté à un tel système et pouvant en outre, plus généralement, avoir des applications dans d'autres domaines, cet écran palliant tout ou partie des inconvénients des écrans connus. Résumé

Ainsi, un mode de réalisation prévoit un écran comportant des portions transparentes et des portions rétroréfléchissantes réparties sur tout ou partie de sa surface, dans lequel le taux d'occultation par les portions rétroréfléchissantes est inférieur ou égal à 20 %.

Selon un mode de réalisation, chaque portion rétroréfléchissante est séparée de portions rétroréfléchissantes voisines par au moins une portion transparente.

Selon un mode de réalisation, l'écran comporte une pluralité de régions élémentaires juxtaposées comportant chacune une portion rétroréfléchissante entourée par une portion transparente.

Selon un mode de réalisation, l'écran comporte une plaque en un matériau transparent dont une première face est structurée au niveau des portions rétroréfléchissantes de l'écran et lisse au niveau des portions transparentes de l'écran, et dont une deuxième face opposée à la première face est lisse.

Selon un mode de réalisation, les structurations de la première face au niveau des portions rétroréfléchissantes de l'écran forment des protubérances en coins de cube.

Selon un mode de réalisation, chaque portion rétroréfléchissante de l'écran comprend une unique protubérance en coin de cube.

Selon un mode de réalisation, chaque portion rétroréfléchissante de l'écran comprend plusieurs protubérances en coins de cube adjacentes.

Selon un mode de réalisation, l'écran comporte une plaque en un matériau transparent dont une première face est revêtue d'une couche d'un matériau rétroréfléchissant à base de microbilles au niveau des portions rétroréfléchissantes de l'écran, et n'est pas revêtue par ladite couche au niveau des portions transparentes de l'écran.

Selon un mode de réalisation, l'écran comporte : un premier élément en un matériau transparent dont une première face comprend des échancrures en coins de cube au niveau des portions rétroréfléchissantes de l'écran, séparées par des zones lisses correspondant aux portions transparentes de l'écran, les parois des échancrures étant revêtues d'une couche métallique ; et un deuxième élément en un matériau transparent comportant une première face plane collée à la première face du premier élément par l'intermédiaire d'une couche de colle transparente.

Selon un mode de réalisation, les portions rétroréfléchissantes comportent en outre des éléments diffusants.

Un autre mode de réalisation prévoit un assemblage comportant un pare-brise de véhicule et un écran du type susmentionné revêtant au moins partiellement une face du pare-brise.

Un autre mode de réalisation prévoit un système d'affichage d'une image sur un pare-brise, comportant : un écran du type susmentionné revêtant au moins partiellement une face du pare-brise ; et un projecteur adapté à projeter une image sur cet écran.

Selon un mode de réalisation, le projecteur est adapté à être monté sur la tête d'un utilisateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, précédemment décrite, est une vue en coupe représentant de façon schématique un exemple d'un système d'affichage d'une image sur un pare-brise ;
la figure 2 est une vue en coupe représentant de façon schématique un exemple d'un mode de réalisation d'un système d'affichage d'une image sur un pare-brise ;
les figures 3 et 4 sont des vues respectivement de dessus et en coupe représentant de façon schématique et partielle un exemple d'un écran rétroréfléchissant ;
les figures 5A à 5D sont des vues en coupe représentant de façon schématique et partielle des étapes d'un procédé de fabrication d'un exemple d'un premier mode de réalisation d'un écran ;
la figure 6 est une vue en coupe représentant de façon schématique et partielle une variante de réalisation de l'écran décrit en relation avec les figures 5A à 5D ;
la figure 7 est une vue en coupe représentant de façon schématique et partielle une autre variante de réalisation de l'écran décrit en relation avec les figures 5A à 5D ;
la figure 8 est une vue en coupe représentant de façon schématique et partielle un exemple d'un deuxième mode de réalisation d'un écran ;
la figure 9 est une vue en coupe représentant de façon schématique et partielle un exemple d'un troisième mode de réalisation d'un écran ; et
les figures 10A à 10D sont des vues en coupe représentant de façon schématique et partielle des étapes d'un procédé de fabrication d'un exemple d'un quatrième mode de réalisation d'un écran.

### Description détaillée

Par souci de clarté, de mêmes éléments ont été désignés par de mêmes références aux différentes figures et, de plus, les diverses figures ne sont pas tracées à l'échelle. Par ailleurs, dans la suite de la description, sauf indication contraire, les termes "approximativement", "sensiblement", "environ", "quasiment" et "de l'ordre de", signifient "à 10 % près", ou, lorsqu'il s'agit de valeurs angulaires ou assimilées, "à 10 degrés près". En outre, dans la présente demande, sauf indication contraire, le terme transparent est utilisé pour qualifier des éléments, matériaux, films, assemblages, etc., laissant passer sans altération significative la lumière du spectre visible ou de la quasi-totalité du spectre visible. De plus, sauf indication contraire, le terme lisse fait référence à une qualité de surface optique dite "de poli optique", permettant que des faisceaux optiques soient transmis ou réfléchis par la surface sans modification significative de leurs caractéristiques de propagation. Ainsi, une surface lisse transparente permet la visualisation d'une image à travers la surface sans déformation notable. Au sens de la présente demande, une surface lisse présente une rugosité de surface inférieure à 20 nm RMS (de l'anglais "Root Mean Square" - correspondant à la racine carrée de la moyenne de l'amplitude des aspérités de la surface), et de préférence comprise entre 2 et 15 nm RMS.

La figure 2 est une vue en coupe représentant de façon schématique un exemple d'un mode de réalisation d'un système 200 d'affichage d'une image sur un pare-brise transparent 102.

Le système 200 comprend un écran 204, revêtant tout ou partie de la face intérieure du pare-brise 102, c'est-à-dire sa face tournée vers l'intérieur du véhicule. Le système 200 comprend en outre un projecteur 206 adapté à être monté sur la tête d'un utilisateur 108, par exemple le conducteur du véhicule. Le projecteur 206 est de préférence monté sur la tête de l'utilisateur au voisinage de la zone oculaire de façon que l'axe principal de projection Y soit proche de l'axe principal X du regard de l'utilisateur, par exemple de façon que les axes X et Y forment un angle inférieur ou égal à 20 degrés. A titre d'exemple non limitatif, la zone de sortie lumineuse ou zone d'émission du projecteur 206 est située à moins de 20 cm et de préférence à moins de 10 cm des pupilles de l'utilisateur. Le projecteur 206 est adapté à projeter une image sur tout ou partie de la surface de l'écran 206 tournée vers l'intérieur du véhicule (c'est-à-dire opposée au pare-brise 102).

Selon un aspect des modes de réalisation décrits, l'écran 204 est un écran partiellement transparent et partiellement rétroréfléchissant. En d'autres termes, l'écran 204 est adapté à rétroréfléchir - c'est-à-dire réfléchir en direction de sa source - de la lumière provenant du projecteur 206, et à laisser passer sans altération significative de la lumière provenant du pare-brise 102, c'est-à-dire de l'extérieur du véhicule. L'écran 204 a ainsi une fonction de transparence, permettant à l'utilisateur de voir la scène extérieure à travers le pare-brise 102 depuis l'intérieur du véhicule, et une fonction de rétroréflexion, permettant à l'utilisateur - dont les pupilles sont voisines du projecteur 206 - de voir, en superposition de la scène extérieure, une image produite par le projecteur 206. La source lumineuse 206 ne pouvant pas être placée exactement dans l'axe du regard de l'utilisateur (sauf à prévoir un élément de renvoi de type lame semi-réfléchissante placé devant l'oeil de l'utilisateur, ce qui serait relativement encombrant et pourrait provoquer une gêne pour l'utilisateur), l'écran 204 doit en outre de préférence être adapté à diffuser la lumière rétroréfléchie dans un cône de diffusion 210 englobant les pupilles de l'utilisateur, pour que l'utilisateur puisse voir l'image affichée par le projecteur. Le cône de diffusion 210 peut toutefois avoir une ouverture angulaire relativement faible, par exemple comprise dans une plage allant de 5 à 30 degrés, du fait de la proximité entre le projecteur 206 et les yeux de l'utilisateur. En tout état de cause, l'ouverture angulaire du cône de diffusion peut être nettement plus faible que dans un système à écran diffuseur réflectif du type décrit en relation avec la figure 1.

Ainsi, un avantage du système de la figure 2 est qu'il présente un rendement lumineux supérieur à celui du système de la figure 1.

Diverses variantes de réalisation, non représentées, du système de la figure 2 peuvent être prévues, ces variantes pouvant, le cas échéant, être combinées.

A titre d'exemple, le système 200 peut comprendre une caméra, par exemple mais non nécessairement montée sur la tête de l'utilisateur, adaptée à acquérir une représentation de la scène extérieure proche de celle perçue par l'utilisateur. La prévision d'une caméra peut notamment permettre de mettre en oeuvre des fonctionnalités de réalité augmentée.

Si une caméra est montée sur la tête de l'utilisateur, on peut optionnellement prévoir un système de lancement d'applications basé sur la reconnaissance, sur les images acquises par la caméra, de pictogrammes formés sur des régions périphériques de l'écran 204, par exemple par impression, gravure ou par toute autre méthode adaptée. Par exemple, un pictogramme peut correspondre à une application particulière de projection, qui peut être lancée lorsque l'utilisateur déplace sa tête de façon que le pictogramme entre dans le champ de vision de la caméra ou passe par une position particulière du champ de vision de la caméra. La fermeture de l'application peut être commandée lorsque le pictogramme sort du champ de vision de la caméra, ou entre une deuxième fois dans le champ de vision de la caméra, ou passe une deuxième fois par une position particulière du champ de vision de la caméra. Un avantage est que l'utilisateur peut ainsi lancer et/ou fermer des applications uniquement par des mouvements de tête, sans avoir à utiliser ses mains.

En outre, le système de la figure 2 peut comprendre deux projecteurs distincts situés respectivement au voisinage des deux yeux de l'utilisateur. A titre d'exemple non limitatif, un premier projecteur peut être situé à moins de 10 cm et de préférence à moins de 5 cm d'une première pupille de l'utilisateur, et un deuxième projecteur peut être situé à moins de 10 cm et de préférence à moins de 5 cm de la seconde pupille de l'utilisateur. Le cône de diffusion de la lumière rétroréfléchie par l'écran 204 peut être choisi de façon à n'englober qu'un seul des deux yeux de l'utilisateur. Un avantage est que l'on peut ainsi projeter des images différentes via les deux projecteurs, ce qui peut permettre d'améliorer le confort de vision.

A titre d'exemple non limitatif, le ou les projecteurs du système de la figure 2 peuvent être des projecteurs à micromiroirs de type DMD (de l'anglais "Digital Micromirror Device" - dispositif numérique à micromiroir). Chaque projecteur peut par exemple comporter : une source lumineuse comportant une ou plusieurs diodes électroluminescentes et un ou plusieurs éléments optiques de mise en forme de la lumière émise ; un dispositif de génération d'image de type DMD ; et un ou plusieurs éléments optiques de mise en forme du faisceau d'image. Pour minimiser l'encombrement au niveau de la tête de l'utilisateur, la source lumineuse peut être déportée par rapport au dispositif de génération d'image, la lumière produite par la source étant transmise au dispositif de génération d'image par l'intermédiaire d'un ou plusieurs guides de lumière, par exemple des fibres optiques. Un avantage est que les contraintes d'encombrement et/ou de poids pesant sur la source lumineuse peuvent être réduites.

Des exemples de modes de réalisation de l'écran 204 du système de la figure 2 vont être décrits ci-après.

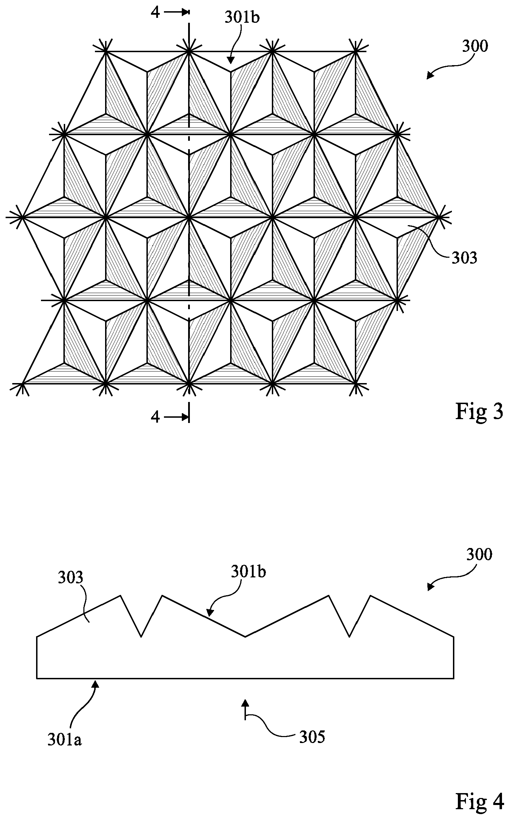

Les figures 3 et 4 sont des vues respectivement de dessus et en coupe représentant de façon schématique et partielle un exemple d'un écran rétroréfléchissant traditionnel. La figure 4 est une vue en coupe de l'écran 300 selon le plan 4-4 de la figure 3.

Dans cet exemple, l'écran 300 est constitué par une plaque, une feuille ou un film en un matériau transparent, par exemple du verre ou du plastique, dont une face 301a est approximativement lisse et dont une face 301b opposée à la face 301a est structurée et présente des protubérances 303 sensiblement identiques. Chaque protubérance 303 a sensiblement la forme d'un coin de cube, c'est-à-dire d'un trièdre comportant trois faces latérales triangulaires mutuellement perpendiculaires se rejoignant en un même point ou sommet, et, à l'opposé du sommet, une base triangulaire, par exemple en forme de triangle équilatéral. Les bases des protubérances 303 sont approximativement parallèles à la face lisse 301a de l'écran, et les protubérances 303 sont sensiblement adjacentes et recouvrent sensiblement toute la surface de l'écran. Les dimensions des protubérances 303 dépendent de l'application visée. A titre d'exemple, la base de chaque protubérance peut être un triangle équilatéral de 100 µm à 1 mm de côté.

L'écran 100 est destiné à être éclairé par sa face lisse 301a, comme illustré schématiquement par la flèche 305 de la figure 4. Lorsqu'un faisceau lumineux incident (non représenté) atteint l'écran 300, ce faisceau traverse une partie de l'épaisseur de l'écran jusqu'à atteindre la base de l'un des coins de cube 303, pénètre dans ce coin de cube, puis est réfléchi sur chacune des trois faces latérales du coin de cube, et, après réflexion sur la troisième face latérale, repart en direction de sa source.

Dans l'exemple représenté, les réflexions sur les faces latérales des coins de cube sont basées sur le principe de la réflexion totale interne. A titre de variante, les faces latérales des coins de cube peuvent être recouvertes d'un matériau réfléchissant tel que de l'aluminium du côté de la face 301b de l'écran. Les réflexions sur les faces latérales des coins de cube sont alors des réflexions de type miroir.

L'écran 300 des figures 3 et 4 n'est pas transparent, et en particulier, ne permet pas à un utilisateur situé du côté de la face 301a de l'écran de visualiser à travers l'écran une scène située du côté de la face 301b de l'écran. En effet, même lorsque la face 301b de l'écran n'est pas revêtue d'un matériau réfléchissant, les structurations de la face 301b donnent à l'écran 300 un aspect dépoli, le privant de la transparence naturelle du matériau le constituant. Un tel écran n'est donc pas adapté à un système d'affichage du type décrit en relation avec la figure 2.

Selon un aspect des modes de réalisation décrits, on prévoit un écran 204 comportant des portions transparentes et des portions rétroréfléchissantes non transparentes régulièrement réparties sur tout ou partie de sa surface. Chaque portion rétroréfléchissante est par exemple séparée de portions rétroréfléchissantes voisines par au moins une portion transparente. A titre d'exemple, l'écran 204 comprend, vu de face, une pluralité de régions élémentaires sensiblement identiques juxtaposées, recouvrant sensiblement toute la surface de l'écran, chaque région élémentaire comportant une portion rétroréfléchissante et une portion transparente. A titre d'exemple, dans chaque région élémentaire, la portion transparente entoure la portion réfléchissante (en vue de face). Les dimensions des portions rétroréfléchissantes et l'espacement entre les portions rétroréfléchissantes sont choisis de façon à permettre la visualisation d'une scène en transparence à travers l'écran 204. Les portions rétroréfléchissantes permettent par exemple d'ajouter des informations à l'image de la scène réelle vue à travers l'écran dans un système d'affichage du type décrit en relation avec la figure 2. A titre d'exemple, les dimensions des portions rétroréfléchissantes sont telles que, vu de face, la surface rétroréfléchissante de l'écran soit inférieure ou égale à 50 % et de préférence inférieure ou égale à 20 % à la surface totale de l'écran, la surface restante étant transparente. Les modes de réalisation décrits ne se limitent toutefois pas à ce cas particulier.

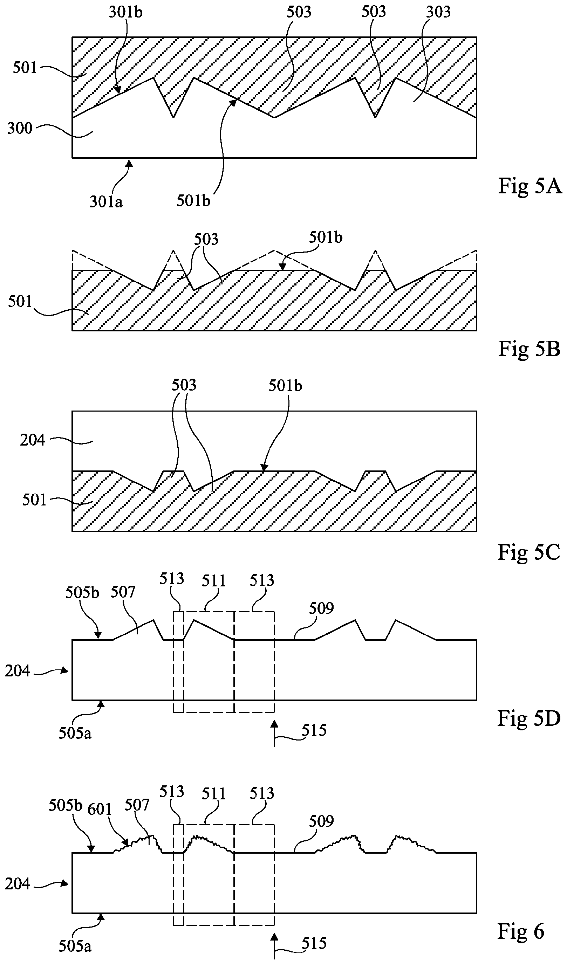

Les figures 5A à 5D sont des vues en coupe représentant de façon schématique et partielle des étapes d'un exemple de procédé de fabrication d'un premier mode de réalisation de l'écran 204.

La figure 5A illustre une étape initiale au cours de laquelle on part d'une structure 300 ayant la forme d'un écran rétroréfléchissant traditionnel non transparent dont une face 301b présente des protubérances 303 en forme de coins de cube revêtant toute ou sensiblement toute la surface de l'écran, par exemple un écran du type décrit en relation avec les figures 3 et 4. La structure 300 est par exemple un écran catadioptrique en verre ou en plastique, ou un moule métallique ayant la forme d'un écran catadioptrique. La structure 300 peut être obtenue par toute méthode connue de fabrication d'un écran rétroréfléchissant à coins de cube, par exemple une méthode du type décrit dans le brevet US8465639. Comme l'illustre la figure 5A, un moule 501 de la surface structurée 301b de la structure 300 est réalisé, par exemple par pressage ou dépôt sous forme liquide d'un matériau adapté sur la surface 301b de la structure 300. A titre d'exemple non limitatif, le moule 501 est en nickel - obtenu par exemple par galvanoplastie - ou en un matériau plastique (par exemple de type polyméthacrylate de méthyle) - obtenu par exemple par moulage à chaud. Le moule 501 présente de préférence une épaisseur supérieure à la hauteur des protubérances 303. Après une éventuelle phase de durcissement, le moule 501 est désolidarisé de la structure 300. Une face 501b du moule 501 comporte alors l'empreinte de la face 301b de la structure 300, c'est-à-dire qu'elle comporte des protubérances 503 de forme complémentaire des protubérances 303 de la structure 300.

La figure 5B illustre une étape au cours de laquelle la face structurée 501b du moule 501 est partiellement polie ou aplanie, c'est-à-dire qu'une partie du matériau du moule est éliminée du côté de la face 501b, sur une épaisseur inférieure à la hauteur des protubérances 503. A l'issue de cette étape, les protubérances 503, initialement pointues, présentent des plateaux sommitaux situés dans un même plan approximativement parallèle à un plan de base des protubérances 503.

La figure 5C illustre une étape postérieure à l'étape de polissage de la figure 5B, au cours de laquelle un écran 204 est réalisé à partir du moule 501. L'écran 204 est par exemple réalisé par pressage ou dépôt sous forme liquide d'un matériau transparent, par exemple du plastique ou du verre, sur la face 501b du moule. L'écran 204 présente de préférence une épaisseur supérieure à la hauteur des protubérances 503 du moule. Après une éventuelle phase de durcissement, l'écran 204 est désolidarisé du moule 501.

La figure 5D est une vue en coupe illustrant l'écran 204 obtenu à la sortie du moule 501. Comme cela apparaît sur la figure 5D, dans cet exemple, l'écran 204 est constitué d'une plaque, feuille ou film en un matériau transparent dont une face 505a est approximativement lisse, et dont une face 505b opposée à la face 505a présente des protubérances 507 sensiblement identiques et régulièrement réparties sur toute la surface de l'écran. Chaque protubérance 507 a une forme de coin de cube, les bases des protubérances 507 étant, dans cet exemple, approximativement parallèles à la face lisse 505a de l'écran. Comme illustré schématiquement par une flèche 515 sur la figure 5D, l'écran 204 est destiné à être éclairé par sa face 505a. Une différence entre l'écran 204 de la figure 5D et la structure 300 des figures 3 et 4 est que, dans l'écran 204 de la figure 5D, les protubérances 507 ne sont pas adjacentes mais sont séparées les unes des autres par des zones sensiblement lisses 509 de la face 505b, parallèles ou approximativement parallèles à la face 505a de l'écran, correspondant aux plateaux sommitaux des protubérances 503 du moule 501.

Dans cet exemple, chaque portion d'écran en regard d'une protubérance 507 de la face 505b correspond à une portion rétroréfléchissante non transparente de l'écran 204, et les portions d'écran situées en regard de zones lisses 509 de la face 505b correspondent à des portions transparentes de l'écran 204. Ainsi, vu de face, l'écran 204 de la figure 5D comprend une pluralité de régions élémentaires sensiblement identiques et juxtaposées, revêtant sensiblement toute la surface de l'écran, chaque région élémentaire comportant une portion rétroréfléchissante centrale 511 correspondant à une unique protubérance 507, et une portion transparente périphérique 513 entourant la portion rétroréfléchissante 511, correspondant à une portion de zone lisse 509 de la face 505b. A titre d'exemple, dans chaque région élémentaire, en vue de face, le rapport entre la surface occupée par la protubérance 507 et la surface totale de la région élémentaire, ou taux d'occultation, est inférieur ou égal à 50 % et de préférence inférieur ou égal à 20 %. En fonction de l'application visée, le taux d'occultation peut toutefois prendre d'autres valeurs.

Comme indiqué ci-dessus, pour une utilisation dans un système d'affichage du type décrit en relation avec la figure 2, l'écran 204 doit non seulement avoir des propriétés de transparence et des propriétés rétroréfléchissantes, mais doit en outre être adapté à diffuser la lumière rétroréfléchie pour permettre à l'utilisateur de percevoir une partie de cette lumière. On a en outre indiqué ci-dessus que le cône de diffusion de la lumière rétroréfléchie peut avoir une ouverture angulaire relativement faible du fait de la proximité entre la source lumineuse (le projecteur 206) et les pupilles de l'utilisateur.

Dans l'exemple de la figure 5D, l'écran 204 ne comprend pas d'élément spécifiquement adapté pour mettre en oeuvre une fonction de diffusion. En effet, les inventeurs ont constaté que les effets de diffraction sur les bords des protubérances 507 et/ou les inévitables imperfections de surface de l'écran, peuvent, dans certaines applications, suffire à obtenir l'effet de diffusion requis.

Dans certains cas, il peut toutefois être souhaitable que l'écran comporte des éléments spécifiquement adaptés pour mettre en oeuvre une fonction de diffusion.

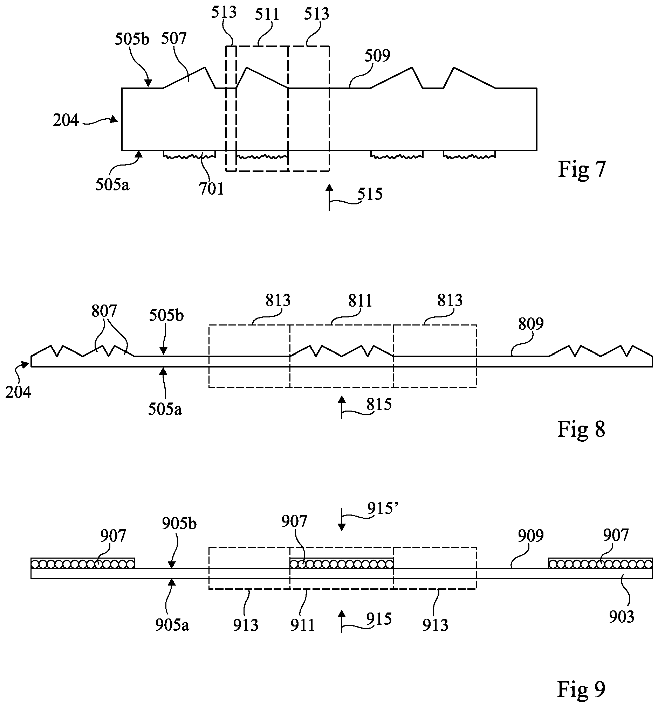

Les figures 6 et 7 sont des vues en coupe représentant de façon schématique et partielle deux variantes de réalisation de l'écran 204 de la figure 5D, dans lesquelles l'écran comprend des éléments spécifiquement adaptés à mettre en oeuvre une fonction de diffusion.

Dans l'exemple de la figure 6, l'écran 204 a une structure similaire à ce qui a été décrit en relation avec les figures 5A à 5D, et diffère de l'écran de la figure 5D en ce que les faces latérales des protubérances 507 présentent des micro-ou nano-structurations 601 adaptées à diffuser la lumière rétroréfléchie par les protubérances. De préférence, les structurations 601 de la face 505b ne sont formées que sur les protubérances 507, c'est-à-dire dans les portions rétroréfléchissantes 511 de l'écran, et non sur les zones lisses 509 de la face 505b, c'est-à-dire dans les portions transparentes 513 de l'écran, afin de ne pas altérer la transparence des portions 513 de l'écran. À titre d'exemple, les structurations 601 peuvent être réalisées en combinant le procédé de fabrication décrit en relation avec les figures 5A à 5D avec un procédé du type décrit dans le brevet US6258443, visant une surface rétroréfléchissante à facettes texturées.

Dans l'exemple de la figure 7, l'écran 204 a une structure similaire à ce qui a été décrit en relation avec les figures 5A à 5D, et diffère de l'écran de la figure 5D en ce qu'il comprend, du côté de sa face 505a, en regard ou en face de chaque protubérance 507, un élément diffusant 701. De préférence, les éléments diffusants 701 sont situés uniquement en face des protubérances rétroréfléchissantes 507, c'est-à-dire dans les portions rétroréfléchissantes 511 de l'écran, et ne s'étendent pas en face des zones lisses 509 de la face 505b, c'est-à-dire dans les portions transparentes 513 de l'écran, afin de ne pas altérer la transparence des portions 513. A titre d'exemple, les éléments diffusants 701 peuvent être formés en déposant un matériau chargé de particules diffusantes sur la face 505a de l'écran, par exemple par sérigraphie, ou en lithographiant des zones de rugosité contrôlée sur la face 505a, ou par moulage - par exemple en même temps que les protubérances 507.

À titre de variante, pour obtenir l'effet diffusant recherché, l'écran 204 peut être réalisé en un matériau transparent chargé de particules diffusantes. Pour que l'effet diffusant soit prépondérant au niveau des protubérances 507 et relativement faible ou négligeable au niveau des zones 509 de l'écran, on réalisera alors de préférence des zones 509 relativement minces par rapport aux protubérances 507, par exemple des zones 509 d'épaisseur inférieure ou égale au dixième de la hauteur des protubérances 507.

La figure 8 est une vue en coupe représentant de façon schématique et partielle un exemple d'un deuxième mode de réalisation de l'écran 204.

Dans cet exemple, l'écran 204 comprend une plaque, feuille ou film en un matériau transparent, par exemple du verre ou du plastique, dont une face 505a est approximativement lisse, et dont une face 505b opposée à la face 505a comprend des zones structurées présentant des protubérances 807 sensiblement identiques en forme de coins de cube, correspondant à des zones rétroréfléchissantes de l'écran, et des zones 809 sensiblement lisses, parallèles ou approximativement parallèles à la face 505a, correspondant à des zones transparentes de l'écran. Comme dans l'exemple de la figure 5D, l'écran 204 comprend, en vue de face, des régions élémentaires sensiblement identiques et juxtaposées, s'étendant sensiblement sur toute la surface de l'écran, chaque région élémentaire comportant une portion centrale 811 rétroréfléchissante non transparente, et une portion périphérique 813 transparente entourant la portion rétroréfléchissante 811. L'écran 204 de la figure 8 diffère de l'écran de la figure 5D en ce que, dans l'écran de la figure 8, dans chaque région élémentaire, la portion rétroréfléchissante centrale 811 comprend non pas une seule mais plusieurs protubérances 807 en coins de cube juxtaposées. Dans chaque région élémentaire, la portion transparente 813 correspond à une portion de zone lisse 809 de la face 505b. Dans chaque région élémentaire, le taux d'occultation par la portion rétroréfléchissante est par exemple inférieur ou égal à 50 % et de préférence inférieur ou égal à 20 %. Comme illustré schématiquement par une flèche 815 sur la figure 8, l'écran 204 est destiné à être éclairé par sa face 505a.

Les variantes de réalisation des figures 5 et 6 peuvent être adaptées au mode de réalisation de la figure 8, c'est-à-dire que l'écran de la figure 8 peut en outre comporter des éléments diffusants supplémentaires au niveau des portions rétroréfléchissantes 811, soit du côté de la face 505b, sous la forme de structurations sur les faces latérales des protubérances 807, soit du côté de la face 505a.

La figure 9 est une vue en coupe représentant de façon schématique et partielle un exemple d'un troisième mode de réalisation de l'écran 204.

Dans cet exemple, l'écran 204 comprend une plaque, feuille ou film 903 transparente, par exemple en verre ou en plastique, dont une face 905b comprend des zones revêtues par une couche 907 d'un matériau rétroréfléchissant à base de microbilles, et des zones 909 non revêtues par la couche 907. Les zones de l'écran dans lesquelles la plaque 903 est revêtue par la couche 907 correspondent à des zones rétroréfléchissantes de l'écran, et les zones de l'écran dans lesquelles la plaque 903 n'est pas revêtue par la plaque 907 correspondent à des zones transparentes de l'écran. A titre d'exemple, vu de face, l'écran 204 de la figure 9 comprend, comme dans les exemples des figures 5D et 8, des régions élémentaires sensiblement identiques et juxtaposées disposées sensiblement sur toute la surface de l'écran, chaque région élémentaire comprenant une portion centrale 911 rétroréfléchissante non transparente, correspondant à une portion de l'écran dans laquelle la plaque 903 est revêtue par la couche 907, et une portion périphérique 913 transparente entourant la portion rétroréfléchissante 911, correspondant à une portion de l'écran dans laquelle la plaque 913 n'est pas revêtue par la couche 907. A titre d'exemple non limitatif, dans chaque région élémentaire, vu de face, le rapport entre la surface occupée par la couche rétroréfléchissante 907 et la surface totale de la région élémentaire, ou taux d'occultation de l'écran par les portions rétroréfléchissantes, est inférieur ou égal à 50 % et de préférence inférieur ou égal à 20 %. Comme illustré schématiquement par des flèches 915 et 915' sur la figure 9, l'écran 204 peut être éclairé soit du côté de la face 905b de la plaque transparente 903, soit du côté de sa face 905a opposée à sa face 905b, les microbilles de la couche 907 étant rétroréfléchissantes pour toutes les directions d'éclairement. A titre de variante, des éléments spécifiquement adaptés à mettre en oeuvre une fonction de diffusion de la lumière rétroréfléchie peuvent être ajoutés à l'écran 204 de la figure 8, par exemple des éléments du type décrit en relation avec la figure 7.

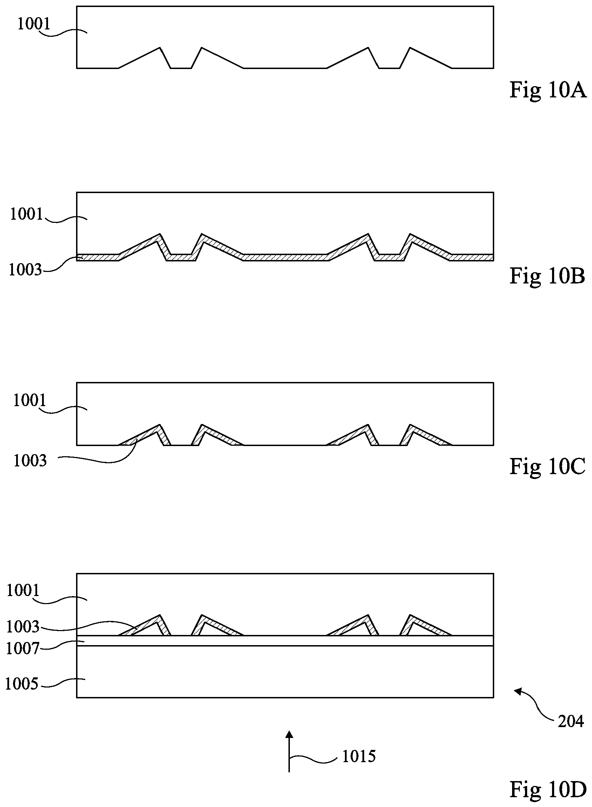

Les figures 10A à 10D sont des vues en coupe représentant de façon schématique et partielle des étapes d'un exemple de procédé de fabrication d'un quatrième mode de réalisation de l'écran 204.

La figure 10A illustre un premier élément 1001 de l'écran 204. L'élément d'écran 1001 de la figure 10A est réalisé en un matériau transparent et comprend des similitudes avec l'écran 204 de la figure 5D. En particulier, l'élément d'écran 1001 comprend une face plane et une face structurée, la face structurée comportant des structurations en coins de cube, correspondant aux portions rétroréfléchissantes de l'écran, séparées par des zones sensiblement parallèles à la face plane de l'élément d'écran 1001, correspondant aux portions transparentes de l'écran. L'élément d'écran 1001 de la figure 10A diffère de l'écran 204 de la figure 5D essentiellement en ce que, dans l'élément d'écran 1001, les structurations en coins de cube ne sont pas en protubérance mais en creux ou en échancrure par rapport aux zones de la face structurée de l'élément d'écran 1001 parallèles à la face plane de l'élément d'écran 1001.

A titre d'exemple, un moule, par exemple métallique, ayant la forme de l'écran 204 de la figure 5D, est réalisé, par exemple par galvanoplastie à partir du moule 501 de la figure 5B, ce moule étant ensuite utilisé pour réaliser l'élément d'écran 1001.

La figure 10B illustre une étape au cours de laquelle une couche métallique réfléchissante 1003 est déposée, de préférence de manière conforme, sur la surface structurée de l'élément d'écran 1001, de manière à s'étendre à la fois dans les échancrures en coins de cube, c'est-à-dire sur les faces latérales de celles-ci, et sur les zones planes entourant les échancrures. L'épaisseur de la couche métallique 1003 est inférieure à la profondeur des échancrures en coins de cube. A titre d'exemple, la profondeur des échancrures en coins de cube est comprise entre 60 et 100 nm, et l'épaisseur de la couche métallique 1003 est comprise entre 30 et 60 nm. La couche métallique 1003 est par exemple une couche d'argent ou d'aluminium.

La figure 10C illustre une étape au cours de laquelle on retire, par exemple par polissage, les portions de la couche métallique 1003 revêtant les zones planes entourant les échancrures de l'élément d'écran 1001. Ainsi, la couche métallique 1003 ne reste présente que dans les échancrures de l'élément d'écran 1001, plus précisément sur les faces latérales de celles-ci.

La figure 10D illustre une étape au cours de laquelle un deuxième élément d'écran 1005 est assemblé au premier élément d'écran 1001, du côté de la face structurée du premier élément d'écran 1001. Le deuxième élément d'écran 1005 peut être un film, une plaque ou une feuille transparente dont les deux faces sont de préférence lisses et planes. L'assemblage des éléments d'écran 1001 et 1005 est par exemple réalisé au moyen d'une couche de colle transparente 1007. La couche de colle 1007 remplit de préférence intégralement les échancrures en coins de cube de l'élément d'écran 1001. A titre d'exemple, les éléments d'écran 1001 et 1005 et la colle transparente 1007 présentent sensiblement le même indice optique. A titre d'exemple, des colles optiques d'indice de l'ordre de 1,5 sont disponibles dans le commerce, par exemple la colle connue sous la dénomination commerciale Polytec UV 2137. Ces colles s'accordent bien avec le verre ou le polyméthacrylate de méthyle, qui peuvent être utilisés pour former les éléments d'écran 1001 et 1005.

Comme l'illustre la figure 10D, l'écran 204 est formé par l'assemblage des éléments d'écran 1001 et 1003, la couche métallique 1003 revêtant les structurations en coins de cube, et la couche de colle transparente 1007.

Comme illustré schématiquement par une flèche 1015 sur la figure 10D, l'écran 204 est destiné à être éclairé par la face de l'élément d'écran 1005 opposée à l'élément d'écran 1001.

On obtient ainsi un écran d'affichage dont les structurations en coins de cube sont protégées de l'environnement par le fait qu'elles soient situées à l'intérieur de l'écran, et dont l'efficacité angulaire de rétroréflexion est améliorée par la présence de la métallisation 1003 revêtant les faces latérales des échancrures en coins de cube. En outre, le nettoyage de l'écran se trouve facilité par le fait que ses deux faces extérieures sont sensiblement lisses.

Comme dans l'exemple de la figure 7, des éléments diffusants (non représentés sur la figure 10D) peuvent être disposés sur la face de l'élément d'écran 1005 opposée à l'élément d'écran 1001, en regard des structurations en coins de cube de l'écran. De préférence, ces éléments diffusants sont disposés uniquement en regard des structurations en coins de cube, et non pas en regard des zones planes de la face structurée de l'élément 1001, de façon à ne pas affecter la transparence des portions transparentes de l'écran.

Des modes de réalisation particuliers ont été décrits. Diverses variantes et modifications apparaîtront à l'homme de l'art.

En particulier, les modes de réalisation décrits ne se limitent pas aux exemples représentés sur les figures dans lesquels l'écran 204 a une forme générale approximativement plane. L'homme du métier saura adapter les exemples décrits à des écrans incurvés, notamment en vue de la projection d'images sur des pare-brise incurvés.

De plus, les modes de réalisation décrits en relation avec les figures 5A à 5D, 6, 7 et 8 ne se limitent pas au cas où les réflexions sur les protubérances en coins de cube des portions rétroréfléchissantes de l'écran sont de type réflexion totale interne. À titre de variante, les faces latérales des coins de cube peuvent être revêtues d'un matériau réfléchissant tel que l'aluminium ou l'argent.

De plus, les modes de réalisation décrits ne se limitent pas aux exemples décrits ci-dessus de disposition, dimensionnement, et répartition sur la surface de l'écran des portions rétroréfléchissantes et des portions transparentes de l'écran. En fonction de l'application visée, l'homme du métier saura prévoir d'autres dispositions des portions rétroréfléchissantes.

Par ailleurs, bien que les modes de réalisation d'écran partiellement transparent et partiellement rétroréfléchissant décrits ci-dessus soient avantageux dans un système d'affichage d'une image sur un pare-brise du type décrit en relation avec la figure 2, les écrans proposés peuvent avoir d'autres applications. A titre d'exemple non limitatif, de tels écrans peuvent être utilisés pour diverses applications de réalité augmentée pour lesquelles la transparence de la zone de projection est requise. On peut notamment prévoir des espaces de scénographie dans des musées, dans lesquels des images sont projetées sur des vitrines derrière lesquelles sont exposées des oeuvres réelles. A titre de variante, de tels écrans peuvent être utilisés non pas comme écran de projection mais comme écran de protection visant à dissuader des visiteurs de photographier au flash certaines oeuvres sensibles. En effet, dans de nombreux musées, les panneaux interdisant la photographie au flash ne suffisent pas à dissuader les visiteurs de réaliser de telles photographies, ce qui peut entrainer une dégradation des oeuvres. L'installation d'un écran partiellement transparent et partiellement rétroréfléchissant devant les oeuvres aurait pour effet que les photographies au flash seraient inévitablement ratées, sans pour autant empêcher les visiteurs de voir les oeuvres. Les visiteurs seraient ainsi dissuadés de réaliser des photographies au flash.

## Revendications

1. Écran (204) comportant des portions transparentes (513 ; 813 ; 913) et des portions rétroréfléchissantes (511 ; 811 ; 911) réparties sur tout ou partie de sa surface, **caractérisé en ce que** le taux d'occultation par les portions rétroréfléchissantes (511 ; 811 ; 911) est inférieur ou égal à 20 %.

2. Écran (204) selon la revendication 1, dans lequel chaque portion rétroréfléchissante (511 ; 811 ; 911) est séparée de portions rétroréfléchissantes (511 ; 811 ; 911) voisines par au moins une portion transparente (513 ; 813 ; 913).

3. Écran (204) selon la revendication 1 ou 2, comportant une pluralité de régions élémentaires juxtaposées comportant chacune une portion rétroréfléchissante (511 ; 811 ; 911) entourée par une portion transparente (513 ; 813 ; 913).

4. Écran (204) selon l'une quelconque des revendications 1 à 3, comportant une plaque en un matériau transparent dont une première face (505b) est structurée au niveau des portions rétroréfléchissantes (511 ; 811) de l'écran et lisse au niveau des portions transparentes (513 ; 813) de l'écran, et dont une deuxième face (505a) opposée à la première face (505b) est lisse.

5. Écran (204) selon la revendication 4, dans lequel les structurations de la première face (505b) au niveau des portions rétroréfléchissantes (511 ; 811) de l'écran forment des protubérances (507 ; 807) en coins de cube.

6. Écran (204) selon la revendication 5, dans lequel chaque portion rétroréfléchissante (511) de l'écran comprend une unique protubérance (507) en coin de cube.

7. Écran (204) selon la revendication 5, dans lequel chaque portion rétroréfléchissante (811) de l'écran comprend plusieurs protubérances (807) en coins de cube adjacentes.

8. Écran (204) selon l'une quelconque des revendications 1 à 3, comportant une plaque (903) en un matériau transparent dont une première face (905b) est revêtue d'une couche (907) d'un matériau rétroréfléchissant à base de microbilles au niveau des portions rétroréfléchissantes (911) de l'écran, et n'est pas revêtue par ladite couche (907) au niveau des portions transparentes (913) de l'écran.

9. Écran (204) selon l'une quelconque des revendications 1 à 3, comportant :
un premier élément (1001) en un matériau transparent dont une première face comprend des échancrures en coins de cube au niveau des portions rétroréfléchissantes de l'écran, séparées par des zones lisses correspondant aux portions transparentes de l'écran, les parois des échancrures étant revêtues d'une couche métallique (1003) ; et
un deuxième élément (1005) en un matériau transparent comportant une première face plane collée à la première face du premier élément (1001) par l'intermédiaire d'une couche de colle transparente (1007).

10. Écran (204) selon l'une quelconque des revendications 1 à 9, dans lequel les portions rétroréfléchissantes (511 ; 811 ; 911) comportent en outre des éléments diffusants (601 ; 701).

11. Assemblage comportant un pare-brise (102) de véhicule et un écran (204) selon l'une quelconque des revendications 1 à 10 revêtant au moins partiellement une face du pare-brise (102).

12. Système d'affichage d'une image sur un pare-brise (102), comportant :
un écran (204) selon l'une quelconque des revendications 1 à 10 revêtant au moins partiellement une face du pare-brise ; et
un projecteur (206) adapté à projeter une image sur ledit écran (204).

13. Système selon la revendication 12, dans lequel le projecteur (206) est adapté à être monté sur la tête d'un utilisateur (108).

## Patentansprüche

1. Ein Bildschirm (204) der transparente Teile (513; 813; 913) und retroreflektive Teile (511; 811; 911) verteilt über die gesammte oder einen Teil seiner Oberfläche aufweist, wobei die Abtastrate bzw. (Screening-Rate) durch die retroreflektiven Teile (511; 811; 911) kleiner oder gleich 20% ist.

2. Der Bildschirm (204) nach Anspruch 1, wobei jeder retroreflektive Teil (511; 811; 911) von seinen benachbarten retroreflektiven Teilen (511; 811; 911) durch mindestens einen transparenten Teil (513; 813; 913) getrennt ist.

3. Der Bildschirm (204) nach Anspruch 1 oder 2, wobei eine Vielzahl von benachbarten elementaren Zonen vorgesehen ist, und deren jede einen retroreflektiven Teil (511; 811; 911) aufweist und zwar umgeben mit einem transparenten Teil (513; 813; 913).

4. Der Bildschirm (204) nach einem der Ansprüche 1 bis 3, mit einer Platte aus einem transparenten Material mit einer ersten Oberfläche (505b) die an dem Niveau der retroreflektiven Teile (511; 811) des Schirms bzw. Bildschirms strukturiert ist und oben glatt ist auf dem Niveau der transparenten Teile (513; 813) des Bildschirms, und mit einer glatten zweiten Oberfläche (505a) entgegengesetzt zu der ersten Oberfläche (505b).

5. Der Bildschirm (204) nach Anspruch 4, wobei die Strukturen der ersten Oberfläche (505b) auf dem Niveau der retroreflektiven Teile (511; 811) des Schirmes kubus-eckenförmige Vorsprünge (507; 807) aufweisen.

6. Der Bildschirm (204) nach Anspruch 5, wobei jeder retroreflektive Teil (511) des Bildschirms einen einzigen kubus-eckenförmigen Vorsprung (507) aufweist.

7. Der Bildschirm (204) nach Anspruch 5, wobei jeder retroreflektive Teil (811) des Bildschirms eine Vielzahl von benachbarten kubus-eckenförmigen Vorsprüngen (807) aufweist.

8. Der Bildschirm (204) nach einem der Ansprüche 1 bis 3, der eine Platte (903) aus einem transparenten Material aufweist mit einer ersten Oberfläche (905b) beschichtet mit einer Schicht (907) aus einem retroreflektiven Material basierend auf Mikrobeads und zwar auf dem Niveau der retroreflektiven Teile (911) des Schirms und die nicht mit der Schicht (907) auf dem Niveau der transparenten Teile (913) des Schirms beschichtet ist.

9. Der Bildschirm (204) nach einem der Ansprüche 1 bis 3, wobei folgendes vorgesehen ist:
ein erstes Element (1001) hergestellt aus einem transparenten Material mit einer ersten Oberfläche die kubus-eckenförmige Ausnehmungen aus dem Niveau der retroreflektiven Teile des Schirms aufweist, und zwar getrennt durch glatte Flächen entsprechend den transparenten Teilen des Schirms, wobei die Wände der Ausnehmungen mit einer Metalschicht (1003) beschichtet sind; und
ein zweites Element (1005) hergestellt aus einem transparenten Material welches eine erste planare Oberfläche aufweist angefügt an die erste Oberfläche des ersten Elements (1001) durch eine transparente Klebeschicht (1007).

10. Der Bildschirm (204) nach einem der Ansprüche 1 bis 9, wobei die retroreflektiven Teile (511; 811; 911) ferner Diffusionselemente (601; 701) aufweisen.

11. Eine Anordnung die eine Fahrzeugwindschutzscheibe (102) und den Bildschirm (204) nach einem der Ansprüche 1 bis 10 aufweist, und zwar mindestens partiell eine Oberfläche der Windschutzscheibe (102) beschichtend.

12. Ein System zur Anzeige eines Bildes auf einer Windschutzscheibe (102) wobei folgendes vorgesehen ist:
der Bildschirm (204) nach einem der Ansprüche 1 bis 10 mindestens teilweise eine Oberfläche der Windschutzscheibe beschichtend; und
ein Projektor (206) der in Lage ist ein Bild auf den Schirm (204) zu projizieren.

13. Das System nach Anspruch 12, wobei der Projektor (206) in der Lage ist an dem Kopf eines Benutzers (108) angebracht zu sein.

## Claims

1. A screen (204) comprising transparent portions (513; 813; 913) and retroreflective portions (511; 811; 911) distributed across all or part of its surface, where the rate of screening by the retroreflective portions (511; 811; 911) is smaller than or equal to 20%.

2. The screen (204) of claim 1, wherein each retroreflective portion (511; 811; 911) is separated from neighboring retroreflective portions (511; 811; 911) by at least one transparent portion (513; 813; 913).

3. The screen (204) of claim 1 or 2, comprising a plurality of juxtaposed elementary regions, each comprising a retroreflective portion (511; 811; 911) surrounded with a transparent portion (513; 813; 913).

4. The screen (204) of any of claims 1 to 3, comprising a plate of a transparent material having a first surface (505b) which is structured at the level of the retroreflective portions (511; 811) of the screen and smooth at the level of the transparent portions (513; 813) of the screen, and having a smooth second surface (505a) opposite to the first surface (505b).

5. The screen (204) of claim 4, wherein the structures of the first surface (505b) at the level of the retroreflective portions (511; 811) of the screen form cube corner protrusions (507; 807).

6. The screen (204) of claim 5, wherein each retroreflective portion (511) of the screen comprises a single cube corner protrusion (507).

7. The screen (204) of claim 5, wherein each retroreflective portion (811) of the screen comprises a plurality of adjacent cube corner protrusion (807).

8. The screen (204) of any of claims 1 to 3, comprising a plate (903) of a transparent material having a first surface (905b) coated with a layer (907) of a retroreflective material based on microbeads at the level of the retroreflective portions (911) of the screen and which is not coated with said layer (907) at the level of the transparent portions (913) of the screen.

9. The screen (204) of any of claims 1 to 3, comprising:
a first element (1001) made of a transparent material having a first surface comprising cube corner recesses at the level of the retroreflective portions of the screen, separated by smooth areas corresponding to the transparent portions of the screen, the walls of the recesses being coated with a metal layer (1003); and
a second element (1005) made of a transparent material comprising a first planar surface pasted to the first surface of the first element (1001) via a transparent glue layer (1007).

10. The screen (204) of any of claims 1 to 9, wherein the retroreflective portions (511; 811; 911) further comprise diffusing elements (601; 701).

11. An assembly comprising a vehicle windshield (102) and the screen (204) of any of claims 1 to 10 at least partially coating a surface of the windshield (102).

12. A system for displaying an image on a windshield (102), comprising:
the screen (204) of any of claims 1 to 10 at least partially coating a surface of the windshield; and
a projector (206) capable of projecting an image on said screen (204).

13. The system of claim 12, wherein the projector (206) is capable of being mounted on the head of a user (108).
